# EUROPÄISCHE PATENTSCHRIFT

(11) **EP 0 534 390 B1**
(45) Veröffentlichungstag und Bekanntmachung des Hinweises auf die Patenterteilung: **06.12.1995**
(21) Anmeldenummer: 92116255.8
(22) Anmeldetag: 23.09.1992
(51) Int. Cl.: E04F 10/06, E06B 9/174, B60P 3/34

(54) **Markise**
Florentine blind
Marquise

(30) Priorität: 27.09.1991 DE 4132362
(43) Veröffentlichungstag der Anmeldung: 31.03.1993
(73) Patentinhaber: Pozzi, Carlo Maurizio, CH-6977 Ruvigliana (CH)
(72) Erfinder: Pozzi, Carlo Maurizio, CH-6977 Ruvigliana (CH)
(74) Vertreter: Reichel, Wolfgang, Dipl.-Ing.

(56) Entgegenhaltungen:
- AU-B- 447 510
- DE-A- 2 137 828
- FR-A- 2 045 299
- US-A- 1 389 603
- US-A- 1 854 959

## Beschreibung

Die Erfindung betrifft Markisen gemäß dem Oberbegriff des Patentanspruchs 1, die sowohl an Gebäuden als auch an Wohnmobilen, Wohnwagen usw. anbringbar sind.

Solche Markisen umfassen ein Gehäuse, das an einer Wand bzw. einem Fahrzeug der genannten Art befestigt wird und eine Ausfahröffnung für den Markisenstoff aufweist, dessen ausziehbares Ende in eines Blendenteil befestigt ist, das in seiner eingefahrenen Stellung die Ausfahröffnung teilweise oder auch ganz verschließt. Darüberhinaus sind bereits eine Reihe von Gehäusen mit einem oder mehreren aufklappbaren Deckelteilen vorgeschlagen worden, die während des Ausziehvorgangs in ihre aufklappbare Stellung bewegt werden und dazu dienen, das nicht ausgezogene Markisentuch vor Witterungseinflüssen zu schützen.

Bekanntermaßen ist es trotz der vielfältigen Verschluß- und Abdichtmaßnahmen für das Markisengehäuse häufig so, daß das Markisentuch allein bei seinem Gebrauch verschmutzt oder infolge der Sonneneinwirkung unansehnlich wird, so daß ein Bedarf besteht, das Tuch zum Zwecke der Reinigung oder des Ersatzes auszutaushen. In den gebräuchlichen Markisen sind jedoch keinerlei Vorkehrungen getroffen, die eine einfache Entnahme der Markisenrolle zulassen würden. So könnte man die Rolle zwar prinzipiell durch die Öffnung von aufgeklappten Deckelteilen entfernen, jedoch ist zu beachten, daß die Markise mit einem seitlich angreifenden Betätigungsmechanismus gekoppelt ist, der die Drehbewegung der Markisenwelle in die Drehbewegung einer Windenwelle umsetzt, die zum Ein- und Ausfahren der Markise betätigt wird. Auch sind üblicherweise Gelenkarme zum Aufspannen der Markise vorhanden, so daß es nicht möglich wäre, die Markisenrolle aus dem Gehäuse zu entnehmen, ohne daß die Markise im wesentlichen auseinandergenommen werden muß, um die Markisenrolle aus ihrer seitlichen Einbindung sowie von den Gelenkarmen zu lösen.

Die DE-A-2 137 828, die im Oberbegriff des Patentanspruchs 1 gewürdigt ist, befaßt sich damit, eine Markisenrolle einfach montieren zu können, auch wenn die Markise an schwer erreichbaren Stellen angebracht ist. Hierzu trägt die Rolle an jedem Ende ein mit dem Rollenende drehfest gekoppeltes Verbindungsteil, in das jeweils der Schaft eines Stiftes eingesteckt ist, auf dem die Rolle schließlich drehbar gelagert ist. Ein mit einer Winde gekoppelter Betätigungsmechanismus liegt nicht vor. Stattdessen findet die Betätigung über einen Ausklapparm-Mechanismus statt. Die Stifte, auf denen die Rolle gelagert ist, sind beidseitig in vertikalen Schlitzen gesichert, welche in nach innen ausgestülpten Plattenteilen auf der Innenseite der seitlichen Gehäuseteile ausgebildet sind. Im Zwischenraum zwischen dem seitlichen Gehäuseteil und dem jeweiligen Plattenteil sitzen zwei zylindrische Abschnitte des Stiftes mit größerem Durchmesser, von denen das innenliegende symmetrisch diametral abgeflacht ist. Die Schlitze weisen federnde Zungen auf, die diese abgeflachten Bereiche der Stifte unter Druck setzen und so ein Aufwippen der Stifte in den Schlitzen verhindern. In beide Schlitze kann so die Welle über die Verbindungsteile und Stifte beidseitig symmetrisch eingesetzt werden.

Der Erfindung liegt die Aufgabe zugrunde, eine Markise mit seitlich angreifendem Betätigungsmechanismus zu schaffen, bei der die Markisenrolle leicht entnehmbar ist.

Diese Aufgabe wird durch den Gegenstand des Anspruchs 1 bzw. 6 gelöst.

Danach ist ein Seitenteil des Markisengehäuses in spezieller Weise ausgebildet und eine Halterungseinrichtung, die es ermöglicht, das dem Betätigungsmechanismus gegenüberliegende Ende der Welle der Markisenrolle, ohne das andere Wellenende aus dem Betätigungsmechanismus zu lösen oder das seitliche Gehäuseteil abnehmen zu müssen, dort zu haltern und aus der Halterung herauszunehmen. Die Ausführung der Halterungseinrichtung nach Anspruch 6 besteht in einem Einsatzteil, in das das Wellenende federbelastet einsetzbar ist. Hierzu kann auf der Innenseite des seitlichen Gehäuseteils eine Feder vorgesehen sein, die ein Einsatzteil trägt, in das das Wellenende gegen die Wirkung der Feder einsetzbar ist. Zur Entnahme kann das Einsatzteil wiederum gegen die Kraftwirkung der Feder verschoben werden. Auch sind weitere federbelastete Halterungen ausführbar, die ohne Lösung des anderen Wellenendes aus dem Betätigungsmechanismus eine einseitige Halterung und Entnahme der Welle gestatten, wobei die Welle einseitig so angehoben werden kann, daß sie ohne Schwierigkeit auf der anderen Seite aus dem Betätigungsmechanismus auskoppelbar ist.

Gemäß der bevorzugten Lösung nach Anspruch 1 umfaßt die Halterungseinrichtung eine Ausnehmung, die sich bis zum Rand des Seitenteils erstreckt und zwar zu dem Randbereich, über dem auch das oder eines der Deckelteile liegt. Auf diese Weise kann das entsprechende Ende der Welle der Markisenrolle, nachdem das andere Wellenende mit den Betätigungsmechanismus am anderen Seitenteil des Gehäuses gekoppelt worden ist, leicht in diese Ausnehmung eingehängt werden. Soll die Markisenrolle entnommen werden, so wird einfach das Wellenende aus dieser Ausnehmung herausgezogen und die Rolle kann über den Rand des Gehäuses angehoben werden, so daß das andere Wellenende aus der Kopplung mit dem Betätigungsmechanismus gelöst werden kann. Anschließend wird die Markisenrolle mit dem Blendenteil, in dem ihr vorderes Ende gehaltert ist, entfernt. Der Stoff oder auch die anderen an der Rolle vorgesehenen Teile können nun gereinigt oder ersetzt werden.

Auf diese Weise ist mit besonders geringem technischen Aufwand die Notwendigkeit vermieden, die Seitenteile des Gehäuses vor der Entnahme der Markisenrolle abnehmen zu müssen.

Vorzugsweise verläuft die Ausnehmung schräg nach oben und vorn und es wird nur ein aufklappbares oder abnehmbares Deckelteil vorgesehen, das sich vom Blendenteil aus über den oberen Gehäusebereich hinweg erstreckt. Das sich aus dem seitlichen Gehäuseteil mit Ausnehmung seitlich heraus erstreckende Wellenende trägt ein Sicherungsteil mit größerem Durchmesser als es der Breite der Ausnehmung entspricht, wobei dieses Teil nach Definition im Anspruch 1 etwas beabstandet zur Gehäuseaußenwandung sitzt, um die einseitige Anhebung der Markisenrolle aus den Gehäuse heraus zu ermöglichen. Im folgenden wird die Erfindung anhand der Zeichnungen näher erläutert. Es zeigen
Fig.1A, 1B und 1C ein Ausführungsbeispiel der erfindungsgemäßen Markise in drei Stellungen von einer Seite gesehen,
Fig.2A, 2B und 2C die Markise aus Fig.1 jeweils von der anderen Seite gesehen in den drei Stellungen, und
Fig.3A, 3B und 3C die Markise aus Fig.1 jeweils von vorn gesehen in drei weiteren Stellungen bei der Entnahme der Markisenrolle.

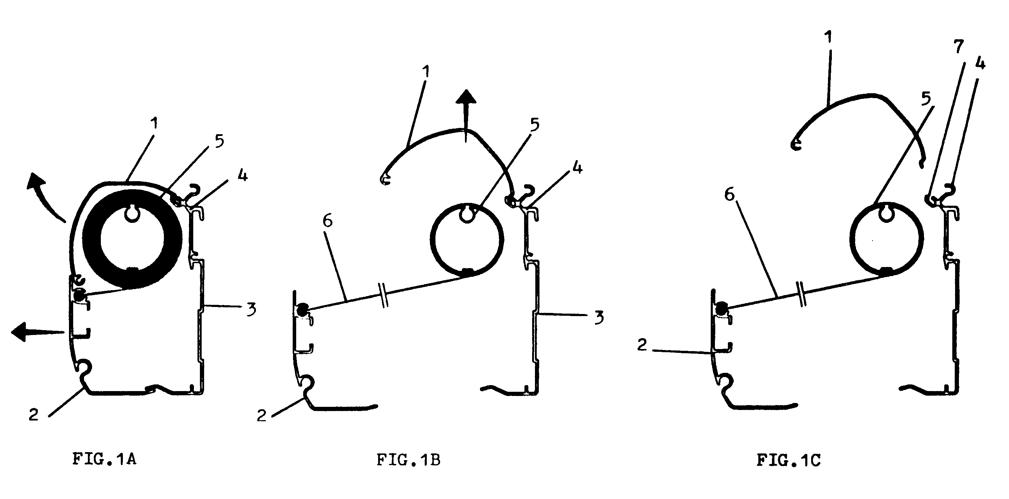

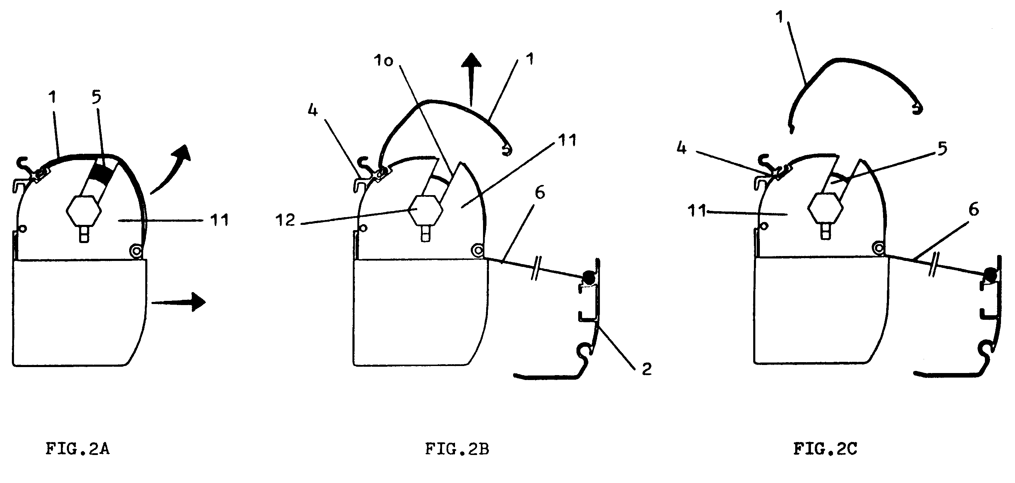

Die in den Figuren 1 bis 3 schematisch skizzierte Markise umfaßt ein Gehäuse mit einem abnehmbaren Deckelteil 1, einem ausziehbaren Blendenteil 2 und einem festen Gehäuseteil 3, das über Befestigungshaken 4 z.B. an einem Wohnmobil befestigbar ist. Im Gehäuse ist eine Markisenrolle 5 aufgenommen, wobei das vordere Ende des ausziehbaren Markisenstoffs 6 im Blendenteil 2 lösbar eingespannt ist. Das Deckelteil 1 ist auf der den Befestigungshaken 4 abgewandten Seite des Gehäuseteils 3 an diesem in einer Nut 7 anbringbar, wobei sein hinteres Ende einen entsprechend geformten, in diese Nut eingreifenden Absatz aufweist, dessen Form aus den Figuren 1 und 2 ersichtlich ist.

Das untere Ende des Deckelteils 1 erstreckt sich in der eingeklappten Stellung so weit nach unten, daß sich die obere Kante des eingefahrenen Blendenteils 2 oberhalb der Einspannstelle des Markisentuchs über das untere Deckelteilende erstreckt. Dieses untere oder vordere Ende des Deckelteils 1 umfaßt eine aus den Figuren ersichtliche Befestigungsnut zu Fixierung des Deckelteils in seiner geschlossenen, am Gehäuse befestigten Stellung. Die Nuten und Absätze können im Fall von Kunststoffausführungen der Teile z.B. in Spritzgießverfahren 4 einfach hergestellt werden. Bei entsprechender Elastizität sind auf diese Weise auch Schnappverbindungen möglich.

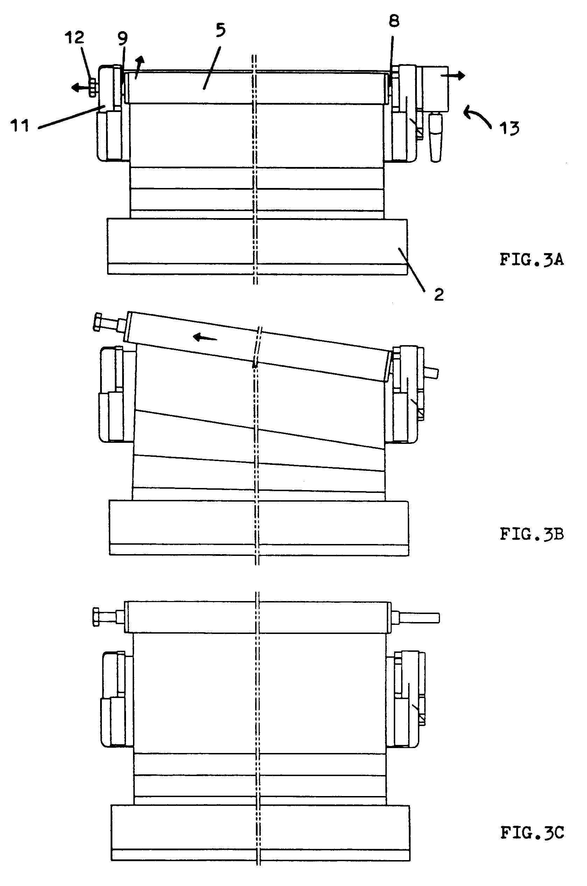

Auf der in Fig.3 rechten Seite der Markise ist ein Betätigungsmechanismus 13 vorgesehen, mit dem das rechte Ende 8 der Markisenwelle gekoppelt ist, um die Drehung der Welle in eine Drehung der sich senkrecht nach unten erstreckenden Windenwelle zu übersetzen, die zum Ein- und Ausfahren der Markise betätigt wird. Da die verschiedenen Betätigungsmechanismen allgemein bekannt sind und nicht Gegenstand der vorliegenden Anmeldung, findet hierzu keine weitere Erläuterung statt.

Das andere Ende 9 der Markisenrollenwelle ist in eine nutförmige Ausnehmung 10 im in Fig.3 linken Seitenteil 11 der Markise eingesetzt. Auf dem aus dem kappenförmigen Kunststoffseitenteil 11 gemäß der aus Fig.1 bis 3 ersichtlichen Form herausragenden Ende der Welle ist eine Mutter 12 aufgesetzt, deren Abstand zur Außenfläche des Seitenteils 11 so groß ist, daß gemäß Fig.2B die linke Seite der Markisenrolle 5 aus dem Gehäuse heraus über den Rand des Seitenteils 11 hinweg anhebbar ist.

In der Figuren sind die einzelnen Stellungen der Teile 1, 2 und 5 entnehmbar. Fig.1A, 2A und 3A ist das Deckelteil 1 mit dem Gehäuse verbunden und befindet sich in seiner Schließstellung. Soll die Markisenrolle 5 entnommen werden, so wird zunächst das Blendenteil 2 ausgezogen und daraufhin wird das Deckelteil 1 angehoben und aus den Verbindungen gelöst (Fig 1B, C und 2B, C). Anschließend wird gemäß Fig.3 das linke Ende der Markisenrolle 5 aus der Ausnehmung 10 herausgehoben und anschließend die Markisenrolle in Richtung des Pfeils nach links aus dem Betätigungsmechanismus 13 gelöst und herausgezogen. Danach kann die Rolle 5 mit dem Blendenteil 2 entfernt werden.

Alternativ ist es möglich, mehrere Deckelteile vorzusehen und auch solche, die nicht abnehmbar sind, sondern nur bis zu einem ausreichenden Grad aufklappbar sind. Die Ausnehmung 10 kann sich beispielsweise auch nach vorn erstrekken, wobei jedoch die abgebildete Lösung sowohl eine bequeme Entnahme als auch sichere Einhängung der Rolle 5 gewährleistet.

Auch die Verbindung von Deckelteil 1 und Blendenteil 2 ist nicht zwingend, liefert jedoch eine vorteilhaft einfache Lösung mit nur zwei bewegbaren Verschlußteilen, die eine gute Abdichtung des Gehäuses ermöglichen. Stattdessen sind auch Konstruktionen möglich, bei denen z.B. der Stoff vom oberen Ende der Rolle abgerollt wird und mehrere aufklappbare Gehäuseteile sich um das Blendenteil legen, wenn die Markise eingefahren wird.

Sämtliche Ausführungen von Deckel- und Blendenteil sind auch für einseitig angreifende Halterungseinrichtungen möglich, in denen das Wellenende federbelastet einsetzbar ist.

## Patentansprüche

1. Markise mit einem fest installierten Gehäuse zur Aufnahme der auf einer Welle (9) drehbar gelagerten Markisenrolle (5), mit einem aus einer Ausfahröffnung der Markise ausfahrbaren Blendenteil (2), das das ausziehbare Ende der Markise enthält, mit seitlichen Gehäuseteilen (11), in denen die Welle der Markisenrolle jeweils seitlich gehaltert ist, wobei an einem (8) Ende der Welle ein Betätigungsmechanismus angreift, und mit mindestens einem aufklappbaren Deckelteil am Gehäuse, wobei im dem Betätigungsmechanismus gegenüberliegenden seitlichen Gehäuseteil (11) eine Halterungseinrichtung (10) vorgesehen ist, in die und aus der die Welle (9) zum Zwecke des Einsetzens und Herausnehmens der Markisenrolle (5) in das bzw. aus dem Gehäuse bei geöffnetem (n) Deckelteil(en) (1) einsetzbar und herausnehmbar ist, ohne das seitliche Gehäuseteil abzunehmen, und mit einem Sicherungsteil (12) am aus einer Ausnehmung (10) der Halterußgseinrichtung herausragenden, in die Ausnehmung eingehängten Wellenende (9),
**dadurch gekennzeichnet,**
daß die Ausnehmung sich bis zum Rand des seitlichen Gehäuseteils (11) unterhalb des Deckelteils (1) oder eines der Deckelteile erstreckt und daß das Sicherungsteil (12) unter einem solchen Abstand zur Außenseite des seitlichen Gehäuseteils (11) vorgesehen ist, daß die Markisenrolle (5) einseitig aus dem Seitenteil heraus anhebbar ist, so daß die andere Seite (8) der Welle aus dem Betätigungsmechanismus (13) herausziehbar ist, der mit einer Winde gekoppelt ist.

2. Markise nach Anspruch 1,
**dadurch gekennzeichnet,**
daß das Sicherungsteil (12) einen größeren Durchmesser als die Breite der Ausnehmung (10) hat.

3. Markise nach Anspruch 1 oder 2,
**dadurch gekennzeichnet,**
daß das Sicherungsteil (12) eine auf das Wellenende aufgesetzte Mutter ist.

4. Markise nach einem der Ansprüche 1 bis 3,
**dadurch gekennzeichnet,**
daß die Ausnehmung (10) länglich ist und sich vom mittleren Bereich des seitlichen Gehäuseteils (11) aus nach oben erstreckt.

5. Markise nach einem der Ansprüche 1 bis 4,
**dadurch gekennzeichnet,**
daß die Ausnehmung (10) länglich ist und sich schräg nach oben zur Ausfahrseite der Markise erstreckt.

6. Markise mit einem fest installierten Gehäuse zur Aufnahme der auf einer Welle (9) drehbar gelagerten Markisenrolle (5), mit einem aus einer Ausfahröffnung der Markise ausfahrbaren Blendenteil (2), das das ausziehbare Ende der Markise enthält, mit seitlichen Gehäuseteilen (11), in denen die Welle der Markisenrolle jeweils seitlich gehaltert ist, wobei an einem (8) Ende der Welle ein Betätigungsmechanismus angreift, und mit mindestens einem aufklappbaren Deckelteil am Gehäuse, wobei im dem Betätigungsmechanismus gegenüberliegenden seitlichen Gehäuseteil (11) eine Halterungseinrichtung vorgesehen ist, in die und aus der die Welle (9) zum Zwecke des Einsetzens und Herausnehmens der Markisenrolle (5) in das bzw. aus dem Gehäuse bei geöffnetem(n) Deckelteil(en) (1) einsetzbar und herausnehmbar ist, ohne das seitliche Gehäuseteil abzunehmen.
**dadurch gekennzeichnet,**
daß die Halterungseinrichtung ein in diesem seitlichen Gehäuseteil (11) vorgesehenes Einsatzteil, in das das Wellenende federbelastet und derart verschiebbar einsetzbar ist, daß die Welle einseitig so anhebbar ist, daß sie ohne Schwierigkeit auf der anderen Seite aus dem Betätigungsmechanismus, der mit einer Winde gekoppelt ist, auskoppelbar ist, aufweist.

7. Markise nach einem der vorhergehenden Ansprüche ,
dadurch gekennzeichnet,
daß ein einziges Deckelteil (1) vorgesehen ist, das sich von oberen Ende des Blendenteils (2) über die Oberseite des Gehäuses ertreckt.

8. Markise nach einem der vorhergehenden Ansprüche,
dadurch gekennzeichnet,
daß das (die) Deckelteil(e) (1) wahlweise vom Gehäuse abnehmbar ist (sind) oder an dessen Oberseite so schwenkbar gehaltert ist (sind) , daß in seiner aufgeklappten Stellung die Markisenrolle (5) aus dem Gehäuse herausnehmbar ist.

9. Markise nach einem der vorhergehenden Ansprüche,
dadurch gekennzeichnet,
daß das obere Ende des eingefahrenen Blendenteils (2) sich über die Unterkante des angrenzenden Deckelteils (1) erstreckt.

## Claims

1. Florentine blind with a fixedly installed housing for receiving the blind roller (5) rotatably mounted on a shaft (9), with a screen portion (2), which may be extended out from an extension opening in the florentine blind and contains the extensible end of the florentine blind, with lateral housing portions (11), in which the shaft of the blind roller is respectively laterally held, wherein an operating mechanism engages at one (8) end of the shaft, and with at least one fold-up cover portion on the housing, wherein in the lateral housing portion (11) opposite the operating mechanism a holding device (10) is provided, into which and from which the shaft (9) may be inserted and removed for the purpose of inserting and removing the blind roller (5) into and out of the housing respectively, when the cover portion(s) (1) is/are open, without detaching the lateral housing portion, and with a locking part (12) on the shaft end (9) projecting from a recess (10) of the holding device and suspended in the recess, characterised in that the recess extends underneath the cover portion (1) or one of the cover portions as far as the edge of the lateral housing portion (11); and that the locking part (12) is disposed at such a distance from the outside of the lateral housing portion (11) that the blind roller (5) may be lifted on one side out of the side portion to permit the other side (8) of the shaft to be removed from the operating mechanism (13) which is coupled to a winch.

2. Florentine blind according to Claim 1, characterised in that the locking part (12) has a larger diameter than the width of the recess (10).

3. Florentine blind according to Claim 1 or 2,
characterised in that the locking part (12) is a nut attached onto the shaft end.

4. Florentine blind according to one of Claims 1 to 3,
characterised in that the recess (10) is elongated and extends upwards from the central area of the lateral housing portion (11).

5. Florentine blind according to one of Claims 1 to 4,
characterised in that the recess (10) is elongated and slopes upwards to the extension side of the florentine blind.

6. Florentine blind with a fixedly installed housing for receiving the blind roller (5) rotatably mounted on a shaft (9), with a screen portion (2), which may be extended from an extending opening in the florentine blind and contains the extensible end of the florentine blind, with lateral housing portions (11), in which the shaft of the blind roller is respectively laterally held, wherein an operating mechanism engages at one (8) end of the shaft, and with at least one fold-up cover portion on the housing, wherein in the lateral housing portion (11) opposite the operating mechanism a holding device is provided, into which and from which the shaft (9) may be inserted and removed for the purpose of inserting and removing the blind roller (5) into and out of the housing respectively, when the cover portion(s) (1) is/are open, without detaching the lateral housing portion, characterised in that the holding device has an insert portion, which is provided in this lateral housing portion (11) and into which the shaft end may be inserted in a spring-loaded manner and so as to be displaceable in such a way that the shaft may be lifted on one side so that it may be disengaged on the other side without difficulty from the operating mechanism which is coupled to a winch.

7. Florentine blind according to one of the preceding claims, characterised in that a single cover portion (1) is provided which extends from the upper end of the screen portion (2) over the upper side of the housing.

8. Florentine blind according to one of the preceding claims, characterised in that the cover portion(s) (1) may be selectively detached from the housing or is (are) pivotally held on its upper side so that when it is in its folded-up position the blind roller (5) may be removed from housing.

9. Florentine blind according to one of the preceding claims, characterised in that the upper end of the retracted screen portion (2) extends over the lower edge of the adjoining cover portion (1).

## Revendications

1. Banne avec un boîtier installé à demeure pour recevoir le rouleau de banne (5) monté en rotation sur un arbre (9), avec une partie de protection (2) pouvant sortir de l'ouverture de sortie de la banne et qui contient l'extrémité déplaçable de la banne, avec des parties de boîtier latérales (11) dans lesquelles est maintenu l'arbre du rouleau de banne à chaque fois latéralement, un mécanisme d'actionnement s'engageant sur une extrémité (8) de l'arbre, et avec au moins, sur le boîtier, une partie de couvercle relevable, un dispositif de maintien (10) étant prévu dans la partie de boîtier latérale (11) opposée au mécanisme d'actionnement, dispositif de maintien dans lequel et depuis lequel l'arbre (9) peut être engagé et extrait afin d'engager et d'extraire le rouleau de banne (5) dans le boîtier ou hors de celui-ci avec la/les partie(s) de couvercle ouvertes, sans retirer la partie de boîtier latérale, et avec une partie de sécurité (12) sur l'extrémité de l'arbre (9) sortant d'un évidement (10) du dispositif de maintien et suspendue dans l'évidement, caractérisée en ce que l'évidement s'étend jusqu'au bord de la partie de boîtier latérale (11) au-dessous de la partie de couvercle (1) ou de l'une des parties de couvercle, et en ce que la partie de sécurité (12) est prévue avec une distance telle à la face extérieure de la partie de boîtier latérale (11) que le rouleau de banne (5) peut être levé d'un côté hors de la partie latérale, de sorte que l'autre côté (8) de l'arbre peut être extrait du mécanisme d'actionnement (13), qui est couplé à un treuil.

2. Banne selon la revendication 1, caractérisée en ce que la partie de sécurité (12) a un diamètre supérieur à la largeur de l'évidement (10).

3. Banne selon la revendication 1 ou 2, caractérisée en ce que la partie de sécurité (12) est un écrou monté sur l'extrémité de l'arbre.

4. Banne selon l'une des revendications 1 à 3, caractérisée en ce que l'évidement (10) est allongé et s'étend vers le haut depuis la zone médiane de la partie de boîtier latérale (11).

5. Banne selon l'une des revendications 1 à 3, caractérisée en ce que l'évidement (10) est allongé et s'étend à l'oblique vers le haut en direction du côté de sortie de la banne.

6. Banne avec un boîtier installé à demeure pour recevoir le rouleau de banne (5) monté en rotation sur un arbre (9), avec une partie de protection (2) pouvant sortir de l'ouverture de sortie de la banne et qui contient l'extrémité déplaçable de la banne, avec des parties de boîtier latérales (11) dans lesquelles est maintenu l'arbre du rouleau de banne à chaque fois latéralement, un mécanisme d'actionnement s'engageant sur une extrémité (8) de l'arbre, et avec au moins, sur le boîtier, une partie de couvercle relevable, un dispositif de maintien étant prévu dans la partie de boîtier latérale (11) opposée au mécanisme d'actionnement, dispositif de maintien dans lequel et depuis lequel l'arbre (9) peut être engagé et extrait afin d'engager et d'extraire le rouleau de banne (5) dans le boîtier ou hors de celui-ci avec la/les partie(s) de couvercle ouvertes, sans retirer la partie de boîtier latérale, caractérisée en ce que le dispositif de maintien présente un insert prévu dans cette partie de boîtier latérale (11), dans lequel l'extrémité de l'arbre peut s'engager sous l'action d'un ressort et de façon déplaçable de telle manière que l'arbre peut être levé d'un côté, de sorte que, de l'autre côté, il peut être découplé sans difficulté du mécanisme d'actionnement, qui est couplé à un treuil.

7. Banne selon l'une quelconque des revendications précédentes, caractérisée en ce qu'une seule partie de couvercle (1) est prévue, qui s'étend depuis l'extrémité supérieure de la partie de protection (2) au-dessus de la face supérieure du boîtier.

8. Banne selon l'une quelconque des revendications précédentes, caractérisée en ce que la/les partie(s) de couvercle (1), au choix, peut (peuvent) être retirée(s) du boîtier ou est (sont) maintenues de manière pivotante sur sa face supérieure, de telle sorte que, dans sa position levée, le rouleau de banne (5) peut être sorti du boîtier.

9. Banne selon l'une quelconque des revendications précédentes, caractérisée en ce que l'extrémité supérieure de la partie de protection (2) rentrée s'étend au-dessus du bord inférieur de la partie de couvercle (1) adjacente.
